# EUROPEAN PATENT SPECIFICATION

(11) **EP 1 516 789 B1**
(45) Date of publication and mention of the grant of the patent: **04.10.2006**
(21) Application number: 04019323.7
(22) Date of filing: 13.08.2004
(51) Int. Cl.: B60R 22/34

(54) **Seatbelt retractor**
Gurtaufroller für einen Sicherheitsgurt
Enrouleur de ceinture de sécurité

(30) Priority: 19.09.2003 JP 2003328044
(43) Date of publication of application: 23.03.2005
(73) Proprietor: TAKATA CORPORATION, Minato-ku, Tokyo 106-8510 (JP)
(72) Inventor: Inuzuka, Koji, Tokyo 106-8510 (JP); Tanaka, Koji, Tokyo 106-8510 (JP)
(74) Representative: Banzer, Hans-Jörg

(56) References cited:
- EP-A- 1 108 627
- WO-A-00/71394

## Description

The present invention relates to a seatbelt retractor retracting a seatbelt for constraining and protecting a passenger in a car such as an automobile, and more specifically, it relates to a seatbelt retractor which controls the belt tension of the seatbelt by rotating a spool with a motor power and which includes an energy-absorbing mechanism (hereinafter, also referred to as an EA mechanism) absorbing shock energy exerting on a passenger caused by the seatbelt when the seatbelt is prevented from being withdrawn, for example, in a case where a car undergoes a large deceleration due to a crash or the like.

### [Background Art]

A seatbelt apparatus attached to a seat in a car such as an automobile includes a seatbelt retractor retracting a seatbelt with a spool. As such retractors, a variety of emergency locking retractors (hereinafter, also referred to as ELRs) have been developed. In the event of an emergency when a large deceleration of a car occurs due to a car crash or the like, since the ELR senses the deceleration, and a locking mechanism prevents a spool from rotation in the belt-withdrawing direction, a seatbelt is prevented from withdrawal caused by a passenger who is likely to move forward due to his or her inertia force. Thus, the ELR more reliably constrains and protects the passenger.

In the meantime, in such an ELR, when the locking mechanism prevents the spool from rotation in the belt-withdrawing direction so that the seatbelt constrains and protects a passenger, the passenger receives a large shock from the seatbelt. Although this shock does not cause a particularly big problem against the passenger, it is desirable if possible to absorb the shock energy caused by the shock so as to limit its impulsive force.

With this view in mind, an ELR having a structure in which an energy-absorbing mechanism (EA mechanism) is disposed so as to absorb shock energy and to limit a load exerted on the seatbelt in the event of the foregoing emergency in a seatbelt-wearing state has been developed. A seatbelt retractor including the EA mechanism and having a torsion bar interposed between the spool and the locking mechanism has been proposed (for example, see Japanese Unexamined Patent Application Publication No. 7-47923). In the seatbelt retractor disclosed in Japanese Unexamined Patent Application Publication No. 7-47923, one end of the torsion bar is fixed to the spool so as to be rotatable together with the same, and the other end of the torsion bar is fixed to a pawl-supporting member (hereinafter, referred to as a usually called locking base) supporting a pawl of the locking mechanism so as to be rotatable together with the same.

Thus, in the event of the foregoing emergency, although the pawl of the locking mechanism engages with a frame so as to prevent the locking base from rotation in the belt-withdrawing direction, since the spool is likely to rotate in the belt-withdrawing direction due to an inertia force of a passenger, the torsion bar is torsionally deformed, and the foregoing shock energy is thus absorbed.

In the meantime, a motor-driven ELR having a structure in which the seatbelt is retracted by rotating the spool with the power of the motor has been proposed (for example, see Japanese Unexamined Patent Application Publication No. 2000-95064). Since the ELR disclosed in Japanese Unexamined Patent Application Publication No. 2000-95064 controls the tension of the seatbelt by retracting the seatbelt with the motor, a passenger is appropriately constrained by the seatbelt in accordance with a car-running situation and so forth.

Furthermore, another seatbelt retractor having a structure in which the above-mentioned motor-driven ELR is applied to an ELR including the foregoing torsion bar has been proposed (for example, see Japanese Unexamined Patent Application Publication No. 2001-163179). In the ELR disclosed in Japanese Unexamined Patent Application Publication No. 2001-163179, when there is a risk of a car crash, the tension of the belt is increased by previously driving the motor in advance of activation of the locking mechanism of the ELR so as to constrain a passenger, and then, when the locking mechanism is activated, the torsion bar is torsionally deformed as described above, so as to absorb shock energy. With this structure, in the event of an emergency, a passenger can be more effectively constrained and protected without suffering from a large shock.

### [Problems to be Solved by the Invention]

Unfortunately, in the seatbelt retractor disclosed in the foregoing Japanese Unexamined Patent Application Publication No. 2001-163179, since the motor is directly connected to the spool through its power transmission system, as described above, after the locking mechanism is activated, when the spool rotates in the belt-withdrawing direction, and the torsion bar is torsionally deformed, the spool receives a certain amount of resistance from the motor and its power transmission system. Although shock energy is somewhat unlikely transmitted to the torsion bar by an amount corresponding to the resistance, this does not particularly deteriorate a shock-energy absorbing-effect of the torsion bar, thereby achieving a satisfactory shock-energy absorbing-effect. Nevertheless, it is desirable if possible to lessen such a resistance as small as possible so as to achieve a more satisfactory shock-energy absorbing-effect.

WO 00/71394 A1, which is considered as the closest prior art, shows a similar seat belt refractor which includes all the features of the preamble of independent claim 1.

The present invention has been made in view of the above problems, and accordingly, it is an object of the present invention to provide a seatbelt retractor in which shock energy is more effectively absorbed by a torsion bar included in a motor-driven ELR.

### [Means for Solving the Problems]

According to the invention this object is achieved by a seatbelt retractor as defined in claim 1. The dependent claims define preferred and advantageous embodiments of the invention.
In order to solve the above-mentioned problems, a seatbelt retractor according to the invention includes at least a spool retracting a seatbelt; a locking mechanism having a locking member which rotates together with the spool under normal conditions and which is prevented from rotation in the seatbelt-withdrawing direction in the event of an emergency; an energy-absorbing mechanism interposed between the spool and the locking member so as to absorb shock energy exerted on a passenger when the spool rotates in the seatbelt-withdrawing direction relative to the locking member in the event of an emergency; a motor generating power for rotating the spool; and a power transmission mechanism transmitting the power of the motor to the spool. The power transmission mechanism is connected to the locking member, and the power of the motor is transmitted to the spool through the power transmission mechanism, the locking member, and the energy-absorbing mechanism.

According to a first preferred embodiment the energy-absorbing mechanism is formed of a torsion bar which connects the spool and the locking member each other and which is torsionally deformed when these components rotate relative to each other.
According to a second preferred embodiment the power transmission mechanism has a torque limiter mechanism disposed therein, preventing a load torque not less than a predetermined set value from being transmitted to the motor.
Furthermore, according to a third preferred embodiment the torque limiter mechanism is formed of a clutch shutting off power transmission to the power transmission mechanism when a load torque not less than the predetermined set value is transmitted to the same.

### [Advantages]

According to the seatbelt retractors according to the invention having the structures as described above, since the power transmission mechanism is connected to the locking member so as to transmit the power of the motor to the spool through the power transmission mechanism, the locking member, and the energy-absorbing mechanism, the spool can be rotated without receiving a resistance from the motor and the power transmission mechanism. As a result, shock energy can be easily transmitted to the energy-absorbing mechanism, whereby the energy-absorbing mechanism can be more effectively activated. With this structure, shock energy exerted on a passenger can be more satisfactorily absorbed and lessened.

Also, the motor and the power transmission mechanism can be disposed close to the locking mechanism of the EA mechanism, thereby increasing the versatility of possible layout features and design features of the retractor, including a design feature of a known retractor in which the motor and the power transmission mechanism are disposed close to the spool of the EA mechanism.

Especially, according to the first preferred embodiment, the EA mechanism is formed of the torsion bar, thereby making the structure of the EA mechanism simple.

Also, according to the second and third preferred embodiments, since the torque limiter mechanism is provided, during the electric motor being driven for retracting the belt, when a load torque not less than a set value is likely transmitted to the power transmission mechanism, due to, for example, the belt tension of the seatbelt occurring when a car deceleration occurs cause by a light crash or the like, the torque limiter mechanism prevents the load torque from being exerted on the power transmission mechanism. As a result, components such as gears of the power transmission mechanism are not required to have so high tolerable strengths. In addition, a load torque exerted on the electric motor can be limited.
In addition, according to the third preferred embodiment, the torque limiter mechanism is formed of the clutch, thereby making the structure of the torque limiter mechanism simple.

### [Brief Description of the Drawings]

Fig. 1 is a schematic sectional view of an example seatbelt retractor according to an embodiment of the present invention.
Fig. 2 is an exploded perspective view, schematically illustrating the example seatbelt retractor shown in Fig. 1.
Fig. 3 is an exploded perspective view, illustrating a part of the example seatbelt retractor shown in Fig. 1 in detail.
Fig. 4 illustrates a locking base used for the example seatbelt retractor shown in Fig. 1, wherein (a) is a perspective view seen from a locking gear, and (b) is a perspective view seen from the IVB direction indicated in (a).
Fig. 5 is a perspective view of the example seatbelt retractor shown in Fig. 1, in a state in which a casing of a motor-driving unit is removed.
Fig. 6 is a perspective view of the example seatbelt retractor shown in Fig. 1, in a state in which all gears of a power transmission mechanism are removed.
Fig. 7 illustrating a connecting gear used for the example seatbelt retractor shown in Fig. 1, wherein (a)is a perspective view seen from the casing of the motor-driving unit, and (b) is a perspective view seen from the VIIB direction indicated in (a).
Fig. 8 illustrates a torque limiter mechanism of the example seatbelt retractor shown in Fig. 1 wherein (a) is an exploded perspective view, (b) is a schematic illustration of a state in which the power of the torque limiter mechanism can be transmitted, and (c) is an illustration of a state in which the power transmission of the torque limiter mechanism is shut off.

### [Best Mode for Carrying Out the Invention]

The best mode for embodying the present invention will be described below with reference to the drawings.

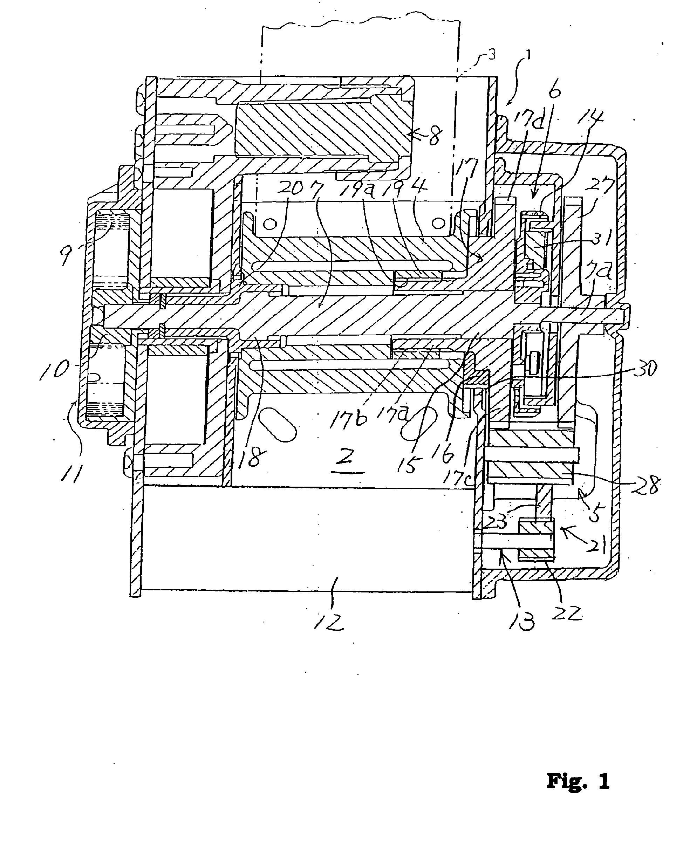

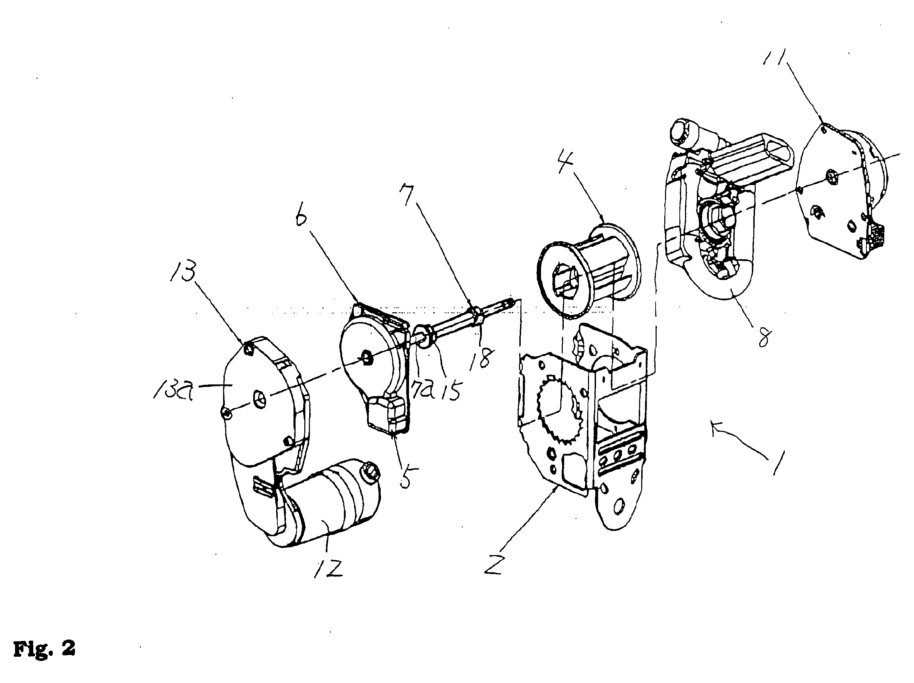

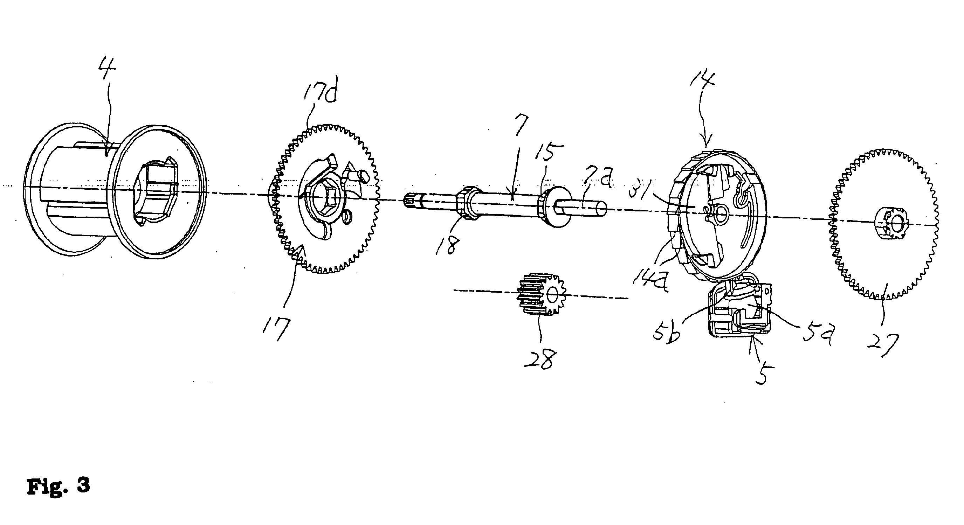

Fig. 1 is a schematic sectional view of an example seatbelt retractor according to an embodiment of the present invention; Fig. 2 is an exploded perspective view, schematically illustrating the example seatbelt retractor shown in Fig. 1; and Fig. 3 is an exploded perspective view, illustrating a part of the example seatbelt retractor shown in Fig. 1 in detail.

As shown in Figs. 1 to 3, an example seatbelt retractor 1 is an ELR and is mainly formed by a C-shaped frame 2; a seatbelt 3; a spool 4 rotatably supported between both sidewalls of the C-shaped frame 2, retracting the seatbelt 3; deceleration-sensing means 5 activated upon sensing a large car deceleration occurring in the event of the foregoing emergency; a locking mechanism 6 activated by the deceleration-sensing means 5 and preventing at least the spool 4 from rotation in the belt-withdrawing direction; a torsion bar 7 loosely fit into and through the center of the spool 4 in the axial direction thereof and rotatably connecting the spool 4 and the locking mechanism 6 each other; a pretensioner 8 applying a belt-retracting torque on the spool 4 by means of reactive gas generating in the event of the foregoing emergency; a spring unit 11 always urging the spool 4 in the belt-retracting direction with the spring force of a spiral spring 9 through a bushing 10; and a motor-driving unit 13 applying the power of an electric motor 12 on the spool 4.

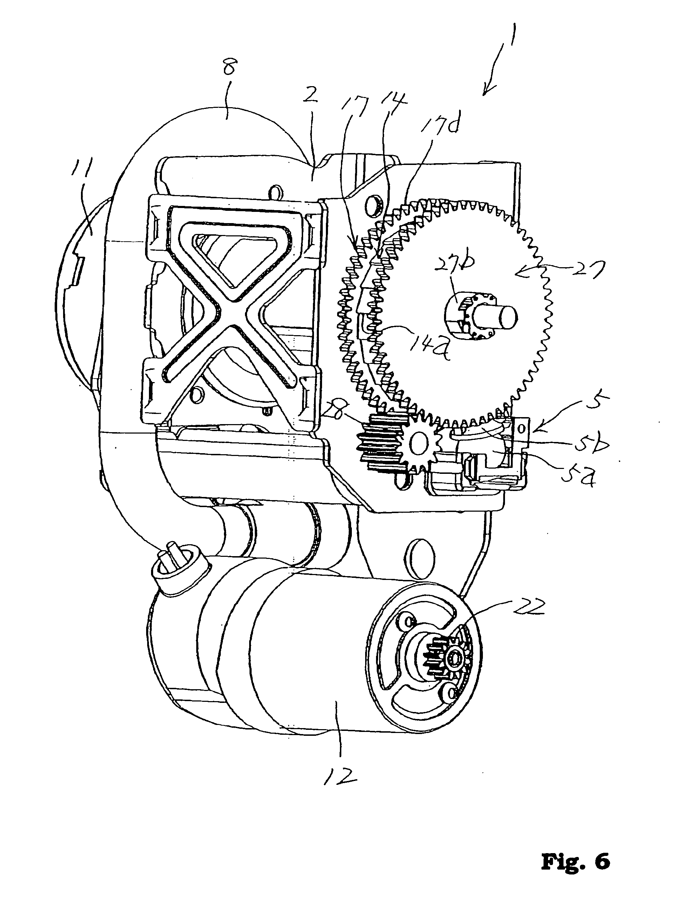

As shown in Figs. 3 and 6, the deceleration-sensing means 5 is a conventionally known component formed by an inertia ball 5a activated in accordance with a car deceleration occurring in the event of an emergency and a retaining catch 5b activated with the activation of the inertia ball 5a. The detailed description thereof is omitted.

The locking mechanism 6 includes a locking gear 14 rotatably supported by a right end 7a of the torsion bar 7, protruding rightward from the sidewall of the frame 2 as shown in Fig. 1, so as to be relatively rotatable with respect to the torsion bar 7; and a locking base (corresponding to a locking member according to the present invention) 17 supported by a first torque-transmitting portion 15 so as to be rotatable together with the same, which will be described later, and swingably holding a pawl 16. The locking gear 14 has ratchet teeth 14a formed along the outer circumference thereof. Under normal conditions, the locking gear 14 rotates together with the torsion bar 7 and, in the event of the foregoing emergency, since the inertia ball 5a of the deceleration-sensing means 5 is activated, it is prevented from rotation in the belt-withdrawing direction, and the retaining catch 5b engages with the ratchet teeth 14a.

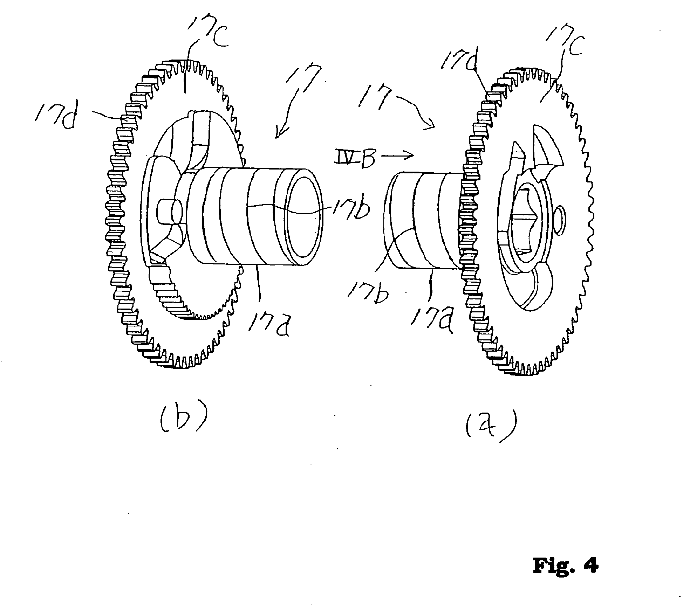

As shown in Figs. 4(a) and (b), the locking base 17 has a cylindrical shaft portion 17a, and the shaft portion 17a has a male thread 17b formed thereon. In addition, the shaft portion 17a has a circular disk-shaped flange portion 17c disposed at and integrally with one end thereof, and the flange portion 17c has external teeth 17d formed along the outer circumference thereof.

The torsion bar 7 has the first torque-transmitting portion 15 formed therein, engaging with the locking base 17 so as not to be relatively rotatable with respect to the same and also has a second torque-transmitting portion 18 formed therein, spaced away from the first torque-transmitting portion 15 by a predetermined spacing and engaging with the spool 4 so as not to be relatively rotatable with respect to the same.
In addition, the spool 4 and the shaft portion 17a of the locking base 17 have a circular a relative-rotation locking member 19 interposed therebetween. The relative-rotation locking member 19 has a female thread 19a formed on the inner circumferential surface thereof so as to screw together with the male thread 17b formed on the shaft portion 17a of the locking base 17 and is fitted into the axial perforation of the spool 4 so as not to be relatively rotatable with respect to the same and so as to be axially movable. When the spool 4 rotates in the belt-withdrawing direction relative to the locking base 17, the relative-rotation locking member 19 rotates together with the spool 4 and moves axially in the rightward direction relative to the spool 4 and the locking base 17 when viewed in Fig. 1.

The pretensioner 8 is a conventionally known component. When the pretensioner 8 is activated at an early stage of an emergency and evolves reactive gas, a belt-retracting torque generated in response to the reactive gas is transmitted to the spool 4 through a bushing 20, whereby the spool 4 retracts the seatbelt 3 by a predetermined amount in an early stage of an emergency.

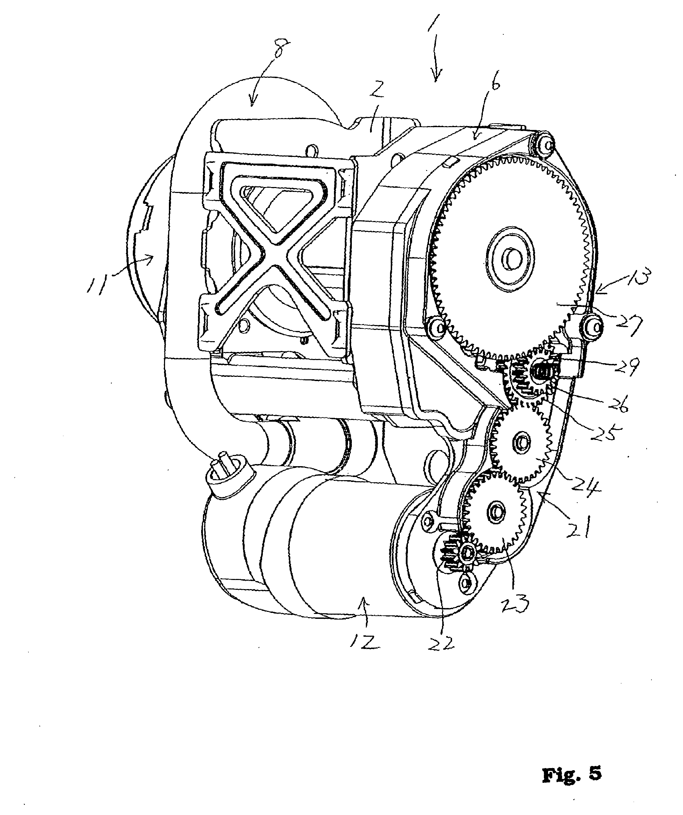

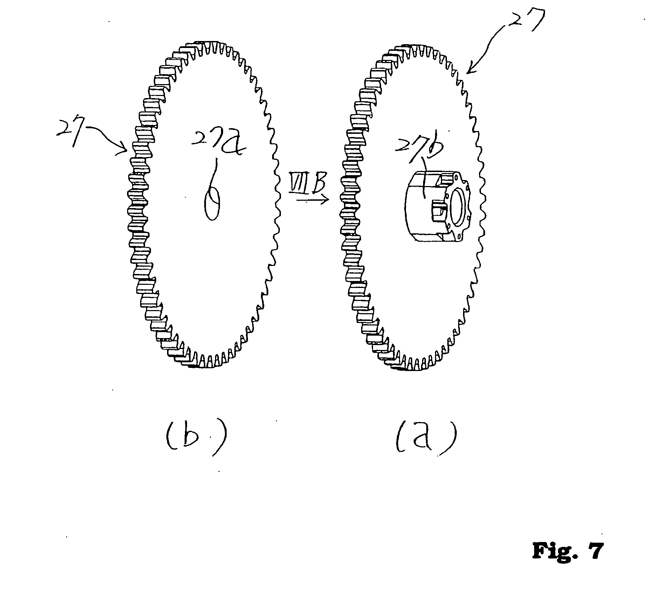

As shown in Figs. 5 and 6, the motor-driving unit 13 includes a power transmission mechanism 21 transmitting the power of the motor 12 to the locking base 17 in a decelerated mode. The power transmission mechanism 21 is formed by a motor gear 22 having a small diameter, fixed to the rotating shaft of the electric motor 12 so as to be rotatable together with the same; a first idle gear 23 always engaging with the motor gear 22 and having a larger diameter than that of the motor gear 22; a second idle gear 24 always engaging with the first idle gear 23 and having the same diameter as that of the first idle gear 23; a first limiter gear 25 always engaging with the second idle gear 24; a second limiter gear 26 disposed coaxially with and next to the first limiter gear 25 and having a smaller diameter than that of the first limiter gear 25; a connecting gear 27 always engaging with the second limiter gear 26, having a larger diameter than that of the motor gear 22 and the same diameter as that of the external teeth 17d of the locking base 17, and supported by the right end 7a of the torsion bar 7 so as to be relatively rotatable with respect to the same; and a pinion gear 28 always engaging with both connecting gear 27 and external teeth 17d of the locking base 17 and having a smaller diameter than those of the connecting gear 27 and the external gear 17d.
As shown in Figs. 7(a) and (b), the connecting gear 27 is formed of a disk having a perforation 27a at the center thereof through which the right end 7a of the torsion bar 7 extends and having a bushing 27b aligned with the perforation 27a so as to protrude axially from the central part thereof.

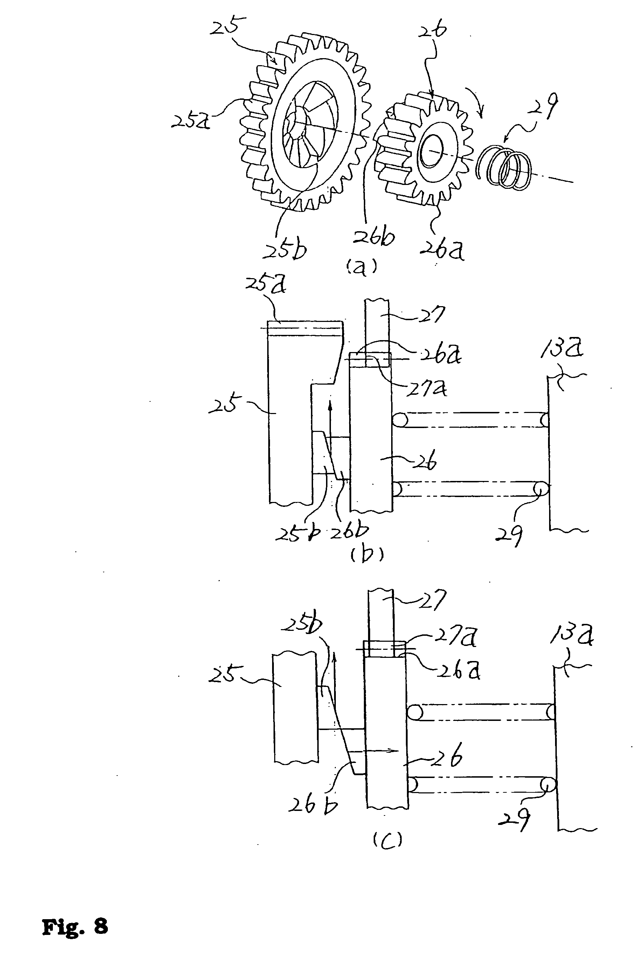

Fig. 8 illustrates a torque limiter mechanism of the example seatbelt retractor shown in Fig. 1, wherein (a) is an exploded perspective view, (b) is a schematic illustration of a state in which the power of the torque limiter mechanism can be transmitted, and (c) is an illustration of a state in which the power transmission of the torque limiter mechanism is shut off.

As shown in Fig. 8(a), the first and second limiter gears 25 and 26 are disposed so as to be relatively rotatable with respect to each other, and the second limiter gear 26 is disposed so as to be axially movable such that it comes into contact with or comes off the first limiter gear 25. The first limiter gear 25 has external teeth 25a formed along the outer circumference thereof, always engaging with the second idle gear 24 and has ratchet teeth 25b formed at the central part thereof and close to the motor. Also, the second limiter gear 26 has external teeth 26a formed along the outer circumference thereof, always engaging with the connecting gear 27, and has ratchet teeth 26b formed at the central part thereof and close to the torsion bar (that is, close to the spool 4). Thus, the second limiter gear 26 is always urged in a direction so as to come closer to the first limiter gear 25 by a limiter spring 29 loaded between a casing 13a of the motor-driving unit 13 and the second limiter gear 26.

With this structure, under normal conditions where a load torque transmitted to the second limiter gear 26 in the belt-withdrawing direction is smaller than a predetermined value set in accordance with a set load of the limiter spring 29, as shown in Fig. 8(b), both ratchet teeth 25b and 26b engage with each other, and the power of the motor 12 shown by the arrow indicated in the figure is transmitted to the first limiter gear 25 and then to the second limiter gear 26. In this state, although the ratchet teeth 26b are subjected to an axial force so as to come off the ratchet teeth 25b, since the foregoing load torque is smaller than the set value, the limiter spring 29 does not contract, whereby both ratchet teeth 25b and 26b are held in engagement with reach other.

When the foregoing load torque is not less than the foregoing set value, as shown in Fig. 8(c), the ratchet teeth 25b slide on the slope of the ratchet teeth 26b and rotate relative to the same. With the relative rotation of the ratchet teeth 25b with respect to the ratchet teeth 26b, the second limiter gear 26 moves axially in the rightward direction so as to come off the first limiter gear 25 while contracting the limiter spring 29. Accordingly, both ratchet teeth 25b and 26b are disengaged from each other, and the second limiter gear 26 is hence not subjected to a load torque equal to or greater than a set value. With this structure, a load torque exerted on the electric motor 12 is limited to a smaller value than its set value and is accordingly protected from an excessive load torque. As described above, a torque limiter mechanism according to the present invention is formed of a clutch formed by the ratchet teeth 25b and 26b and the limiter spring 29.

Next, an operation of the example seatbelt retractor 1 will be described.
When the seatbelt 3 is not worn, it is completely retracted with an urging force of the spring unit 11. Also, the electric motor 12 is at a halt, and a spring force of the limiter spring 29 causes the ratchet teeth 26b of the second limiter gear 26 to lie at a position where it is engageable with the ratchet teeth 25b of the first limiter gear 25.

When the seatbelt 3 is withdrawn at a normal speed for being worn, the spool 4 rotates in the seatbelt-withdrawing direction, so that the seatbelt 3 is fully withdrawn. After a tongue (not shown) slidably attached to the seatbelt 3 is inserted into and latched together with a buckle (not shown) fixed to a car body, an excessively withdrawn portion of the seatbelt 3 is retracted by the spool 4 with an urging force of the spring unit 11, so that a passenger wears the seatbelt 3 such that he or she does not suffer from feeling of pressure. When the tongue is inserted into and latched together with the buckle, a buckle switch (not shown) is turned on, thereby resulting in a state of the electric motor 12 being ready to be driven.

At an early stage of the foregoing emergency, since the seatbelt-retracting torque generated by the pretensioner 8 is transmitted to the spool 4, the spool 4 retracts the seatbelt 3 by a predetermined amount so as to quickly constrain a passenger. In the meantime, a large car-deceleration occurring in the event of an emergency causes the deceleration-sensing means 5 to be activated, so that the locking mechanism 6 is activated as described above. That is, the activation of the deceleration-sensing means 5 prevents the locking gear 14 from rotation in the seatbelt-withdrawing direction and allows the pawl 16 of the locking mechanism 6 to engage with internal teeth 30 formed on the sidewall of the frame 2.

Thus, the locking base 17 is prevented from rotation in the seatbelt-withdrawing direction. However, since the seatbelt 3 is subjected to a withdrawing force due to an inertia force of a passenger, causing the spool 4 to rotate in the belt-withdrawing direction, the torsion bar 7 is twisted; as a result, only the spool 4 rotates in the seatbelt-withdrawing direction relative to the locking base 17. On this occasion, since the motor-driving unit 13 is disposed close to the locking mechanism 6 of the torsion bar 7, the spool 4 rotates without receiving a resistance from the motor-driving unit 13. Accordingly, shock energy is easily transmitted to the torsion bar 7. From then on, since the spool 4 rotates in the seatbelt-withdrawing direction while twisting the torsion bar 7, with the torsional torque of the torsion bar 7, shock energy exerted on a passenger is more satisfactorily absorbed and lessened, and a load exerted on the seatbelt 3 is accordingly limited.

The relative rotation of the spool 4 in the belt-withdrawing direction with respect to the locking base 17 causes the relative-rotation locking member 19 to move axially in the rightward direction when viewed in Fig. 8. Then, upon moving to the end of the male thread of the locking base 17, the relative-rotation locking member 19 does not move axially further in the rightward direction, and its rotation is locked, hence, the relative-rotation locking member 19 does not rotate relative to the locking base 17 (meanwhile, upon coming into contact with the side surface of the flange portion 17c of the locking base 17, the relative-rotation locking member 19 is prevented from moving axially further in the rightward direction).
As a result, the spool 4 is also prevented from relative rotation with respect to the locking base 17. That is, the rotation of the spool 4 in the belt-withdrawing direction is locked, the seatbelt 3 is prevented from being withdrawn, and the seatbelt 3 prevents an inertia movement of a passenger so as to protect him or her.

Also, the example seatbelt retractor 1 has a structure in which, since an inertia member 31 (shown in Figs. 1 and 3) is activated even in the event of abrupt withdrawal of the seatbelt, the locking base 17 of the locking mechanism 6 rotates in the belt-withdrawing direction relative to the locking gear 14 (since the activation of the inertia member 31 is conventionally known, and it is not a characteristic part of the present invention, the detailed description thereof is omitted). With this structure, likewise as described above, the pawl 16 of the locking mechanism 6 engages with the internal teeth 30 formed on the sidewall of the frame 2 so as to prevent the locking base 17 from rotation, whereby the spool 4 is prevented from rotation in the withdrawing direction by the torsion bar 7, and the seatbelt is prevented from being withdrawn.

In the meantime, in a normal seatbelt-wearing state, when the electric motor 12 is driven in a direction corresponding to the belt-retracting direction of the spool 4 in order to control the belt tension of the seatbelt 3, the rotating force thereof is transmitted to the spool 4 through the motor gear 22, the first and second idle gears 23 and 24, the first and second limiter gears 25 and 26, the connecting gear 27, the pinion gear 28, the locking base 17, the torsion bar 7, and the bushing 20, and thus the spool 4 rotates in the belt-retracting direction. With this structure, the seatbelt 3 is retracted, and the belt tension is increased.

When the electric motor 12 is reversely driven in a direction corresponding to the belt-withdrawing direction of the spool 4, the rotating force thereof is likewise transmitted to the spool 4, and thus the spool 4 rotates in the belt-withdrawing direction. Thus, the seatbelt 3 is withdrawn, and the belt tension is decreased.

Meanwhile, during the seatbelt 3 being retracted by the electric motor 12, when a large load torque is exerted on the second limiter gear 26 due to a cause of some kind occurring from the second limiter gear 26 to the spool 4, for example, the belt tension of the seatbelt 3 when a car deceleration occurs due to a crash or the like as light as not to cause the locking mechanism 6 serving as an ELR mechanism to be locked, the power of the electric motor 12 is transmitted, thereby increasing the load torque of the first limiter gear 25 and the load of the electric motor 12 both for rotating the second limiter gear 26. However, when the load torques of the first and second limiter gears 25 and 26 become equal to or greater than the respectively set values, as shown in the previously referred Fig. 8(c), both ratchet teeth 25b and 26b are disengaged from each other, the clutch is turned to an OFF state, and the power transmission is hence shut off. Thus, a load torque equal to or greater than a corresponding set value is not exerted on each component of the power transmission mechanism 21, and the load torque exerted on the electric motor 12 is limited so as not to exceed a set value, whereby the electric motor 12 is prevented from an excessive load torque.

According to the example seatbelt retractor 1 having the structure as described above, since the motor-driving unit 13 (that is, the electric motor 12 and the power transmission mechanism 21) is disposed close to the locking mechanism 6 of the torsion bar 7, the spool 4 is rotatable without receiving a resistance from the motor-driving unit 13. As a result, shock energy can be easily transmitted to the torsion bar 7, whereby the torsion bar 7 is more effectively torsionally deformed. With this structure, shock energy exerted on a passenger can be more satisfactorily absorbed and lessened.

Also, the motor-driving unit 13 can be disposed close to the locking mechanism 6 of the torsion bar 7, thereby increasing the versatility of possible layout and design features of the retractor including a design feature of a known retractor in which the motor-driving unit 13 is disposed close to the spool 4 of the torsion bar 7.
In addition, the EA mechanism is formed of the torsion bar 7, thereby making the structure of the EA mechanism simple.

Furthermore, since the torque limiter mechanism is disposed, during the electric motor 12 being driven for retracting the belt, when a load torque not less than a set value is to be transmitted to the power transmission mechanism 21, due to, for example, the belt tension of the seatbelt 3 occurring when a car deceleration occurs due to a crash or the like as light as not to cause the locking mechanism 6 serving as the ELR mechanism to be locked, the torque limiter mechanism prevents the load torque from being exerted on the power transmission mechanism 21. As a result, components such as gears of the power transmission mechanism 21 are not required to have so high tolerable strengths. In addition, a load torque exerted on the electric motor 12 can be limited, thereby protecting the electric motor 12 from an excessive load torque.

Especially, the torque limiter mechanism is formed of the clutch formed by the ratchet teeth 25b close to the motor, the ratchet teeth 26b close to the spool, and the limiter spring 29, thereby making the structure of the torque limiter mechanism simple.

Although the torsion bar 7 is used as the EA mechanism in the foregoing example, in place of the torsion bar 7, another known EA mechanism, for example, breaking up and deforming an energy-absorbing member or squeezing a belt-like energy-absorbing member can be used, or a combination of the torsion bar 7 and another known EA mechanism can be used.

Although the pretensioner 8 and the relative-rotation locking member 19 are disposed in the foregoing example, these components are not always needed and may be omitted. Also, although the power of the electric motor 12 is transmitted to the locking base 17 through the connecting gear 27 and the pinion gear 28 in the foregoing example, the power of the electric motor 12 can be transmitted to the locking base 17 without passing through these gears 27 and 28, depending on the structure of the retractor 1. In such a case, the connecting gear 27 and the pinion gear 28 may be omitted.

In addition, the torque limiter mechanism formed by the first limiter gear 25, the second limiter gear 26, and the limiter spring 29 is not always needed and may be omitted. However, in order to prevent excessive loads from exerting on the electric motor 12 and the power transmission mechanism 21, the torque limiter mechanism is preferably provided.

### [Industrial Applicability]

The seatbelt retractor according to the present invention is suitable for use in a seatbelt apparatus attached to a seat in a car such as an automobile, for constraining and protecting a passenger.

## Claims

1. A seatbelt retractor comprising at least:
a spool (4) retracting a seatbelt (3); a locking mechanism (6) having a locking member (17) which rotates together with the spool (4) under normal conditions and which is prevented from rotation in the seatbelt-withdrawing direction in the event of an emergency; an energy-absorbing mechanism (7) interposed between the spool (4) and the locking member so as to absorb shock energy exerted on a passenger when the spool (4) rotates in the seatbelt-withdrawing direction relative to the locking member in the event of an emergency; a motor (12) generating power for rotating the spool (4); and a power transmission mechanism (21) transmitting the power of the motor (12) to the spool (4), **characterised in that** the power transmission mechanism (21) is connected to the locking member (17), and the power of the motor (12) is transmitted to the spool (4) through the power transmission mechanism (21), the locking member (17), and the energy-absorbing mechanism (7).

2. The seatbelt retractor according to Claim 1, wherein the energy-absorbing mechanism is formed of a torsion bar (7) which connects the spool (4) and the locking member (17) and which is torsionally deformed when these components rotate relative to each other.

3. The seatbelt retractor according to Claim 1 or 2, wherein the power transmission mechanism (21) has a torque limiter mechanism (25, 26, 29) disposed therein, preventing a load torque not less than a predetermined set value from being transmitted to the motor (12).

4. The seatbelt retractor according to Claim 3, wherein the torque limiter mechanism is formed of a clutch (25b, 26b, 29) shutting off power transmission to the power transmission mechanism (21) when a load torque not less than the predetermined set value is transmitted to the same.

## Patentansprüche

1. Sitzgurtaufrollvorrichtung zumindest umfassend:
eine Spule (4), welche einen Sitzgurt (3) zurückzieht; einen Verriegelungsmechanismus (6) mit einem Verriegelungsteil (17), welches sich zusammen mit der Spule (4) unter normalen Bedingungen dreht und welches an einer Drehung in der den Sitzgurt abwickelnden Richtung bei einem Notfall gehindert wird; einen Energie absorbierenden Mechanismus (7), welcher zwischen der Spule (4) und dem Verriegelungsteil angeordnet ist, um eine Stoßenergie zu absorbieren, welche auf einen Insassen ausgeübt wird, wenn sich die Spule (4) in der den Sitzgurt abwickelnden Richtung relativ zu dem Verriegelungsteil bei einem Notfall dreht; einen Motor (12), welcher eine Leistung erzeugt, um die Spule (4) zu drehen; und einen Leistungsübertragungsmechanismus (21), welcher die Leistung des Motors (12) auf die Spule (4) beträgt, **dadurch gekennzeichnet, dass** der Leistungsübertragungsmechanismus mit dem Verriegelungsteil (17) verbunden ist, und dass die Leistung des Motors (12) durch den Leistungsübertragungsmechanismus (21), das Verriegelungsteil (17) und den Energie absorbierenden Mechanismus (7) auf die Spule (4) übertragen wird.

2. Sitzgurtaufrollvorrichtung nach Anspruch 1, wobei der Energie absorbierende Mechanismus aus einem Drehstab (7) ausgebildet ist, welcher die Spule (4) und das Verriegelungsteil (17) verbindet und welcher sich torsionsartig verformt, wenn sich diese Komponenten relativ zueinander drehen.

3. Sitzgurtaufrollvorrichtung nach Anspruch 1 oder 2, wobei der Leistungsübertragungsmechanismus (21) einen Drehmomentbegrenzungsmechanismus (25, 26, 29) aufweist, welcher darin angeordnet ist und verhindert, dass eine Drehmomentbelastung, welche nicht kleiner als ein vorbestimmter eingestellter Wert ist, auf den Motor (12) übertragen wird.

4. Sitzgurtaufrollvorrichtung nach Anspruch 3, wobei der Drehmomentbegrenzungsmechanismus durch eine Kupplung (25b, 26b, 29) ausgebildet ist, welche eine Leistungsübertragung zu dem Leistungsübertragungsmechanismus (21) unterbricht, wenn eine Drehmomentbelastung, welche nicht kleiner als der vorbestimmte eingestellte Wert ist, auf denselben übertragen wird.

## Revendications

1. Enrouleur de ceinture de sécurité comprenant au moins :
- une bobine (4) rétractant une ceinture de sécurité (3) ; un mécanisme de verrouillage (6) comportant un organe de verrouillage (17) qui tourne avec la bobine (4) dans des conditions normales et qui ne peut pas tourner dans le sens du retrait de la ceinture de sécurité en cas d'urgence ; un mécanisme d'absorption de l'énergie (7) interposé entre la bobine (4) et l'organe de verrouillage, de manière à absorber l'énergie du choc exercée sur un occupant lorsque la bobine (4) tourne dans le sens de retrait de la ceinture de sécurité par rapport à l'organe de verrouillage en cas d'urgence ; un moteur (12) produisant une puissance pour faire tourner la bobine (4) ; et un mécanisme de transmission de puissance (21) qui transmet la puissance du moteur (12) à la bobine (4), **caractérisé en ce que** le mécanisme de transmission de puissance (21) est connecté à l'organe de verrouillage (17) et la puissance du moteur (12) est transmise à la bobine (4) par le mécanisme de transmission de puissance (21), l'organe de verrouillage (17) et le mécanisme d'absorption de l'énergie (7).

2. Enrouleur de ceinture de sécurité selon la revendication 1, dans lequel le mécanisme d'absorption de l'énergie est constitué d'une barre de torsion (7) qui relie la bobine (4) et l'organe de verrouillage (17) et qui est déformée par torsion lorsque ces composants tournent l'un par rapport à l'autre.

3. Enrouleur de ceinture de sécurité selon la revendication 1 ou 2, dans lequel le mécanisme de transmission de puissance (21) comporte un mécanisme limiteur de couple (25, 26, 29) qui empêche un couple de charge supérieur ou égal à une valeur fixe prédéterminée d'être transmis au moteur (12).

4. Enrouleur de ceinture de sécurité selon la revendication 3, dans lequel le mécanisme limiteur de couple est constitué d'un embrayage (25b, 26b, 29) qui coupe la transmission de puissance vers le mécanisme de transmission de puissance (21) lorsqu'un couple de charge supérieur ou égal à la valeur fixe prédéterminée lui est transmis.
